# EUROPEAN PATENT APPLICATION

(11) **EP 4 741 244 A1**
(43) Date of publication of application: **13.05.2026**
(21) Application number: 24211019.5
(22) Date of filing: 06.11.2024
(51) Int. Cl.: B60W 30/00

(54) **LANE CHANGE CLASSIFICATION OF A VEHICLE**

(71) Applicant: Bayerische Motoren Werke Aktiengesellschaft, 80809 München (DE)
(72) Inventor: Zohouri, Ramin, 80993 München (DE)

(57) **Abstract**

A method for lane change classification of a vehicle comprises the following steps carried out by computer hardware components: acquiring sensor data representing a movement of a vehicle on a traffic lane over a predetermined time period; determining, on the basis of the sensor data, a lateral velocity of the vehicle and a lateral distance of the vehicle relative to a boundary of the traffic lane; assigning the movement of the vehicle to a lane changing class or a lane keeping class on the basis of a classification function, the lane changing class being associated with the vehicle departing from the lane, the lane keeping class being associated with the vehicle staying on the lane, wherein the classification function is defined in a lateral velocity dimension of the vehicle and a lateral distance dimension of the vehicle, and the classification function representing a boundary between the lane changing class and the lane keeping class.

## Description

The present disclosure relates to methods for lane change classification of vehicles.

Lane change classification based on vehicle sensor data can be used in different types of assisted or automatic driving functions, e.g., lane keeping assistance, active lane guidance, adaptive cruise control, or automated lane change. Although regular lane change maneuvers can be detected with high reliability it has been found that certain vehicle movements within the lane can often be falsely interpreted as a lane change. In other words, a vehicle, which only appears to be performing a lane change (but actually stays in the lane), can be classified as false positive with respect to performing a lane change. For example, a vehicle may travel very close to the lane boundary but in fact does not perform a lane change. Due to the movement of the vehicle towards the lane boundary, a system may falsely classify this vehicle as performing a change from the current lane to the adjacent lane. This scenario can be particularly critical when the vehicle appears to cut into the lane of another vehicle traveling with higher velocity (so called cut-in maneuver). As a result, an ego vehicle, which relies on the lane change classification of a target vehicle, may automatically break unexpectedly although this is in fact not necessary. The scenario can also be dangerous for other traffic participants, which do not expect a sudden braking event. Therefore, false positive classification of lane changes can potentially cause accidents, especially in heavy traffic situations including traffic jams.

It is an object of the invention to provide a reliable method for lane change classification of a vehicle, in particular for minimizing the risk of false positive classifications of lane changes.

In one aspect, the present disclosure is directed to a method for lane change classification of a vehicle, the method comprising the following steps carried out by computer hardware components: acquiring sensor data representing a movement of a vehicle on a traffic lane over a predetermined time period; determining, on the basis of the sensor data, a lateral velocity of the vehicle and a lateral distance of the vehicle relative to a boundary of the traffic lane; assigning the movement of the vehicle to a lane changing class or a lane keeping class on the basis of a classification function, the lane changing class being associated with the vehicle departing from the lane, the lane keeping class being associated with the vehicle staying on the lane, wherein the classification function is defined in a lateral velocity dimension of the vehicle and a lateral distance dimension of the vehicle, and the classification function representing a boundary between the lane changing class and the lane keeping class.

It has been found that the method provides lane change classification with high reliability. Particularly, the rate of false positives is reduced, thereby avoiding potentially dangerous traffic scenarios in connection with automated driving systems, which rely on the lane change classification result. The classification function itself is defined in two dimensions for describing the state of the vehicle in the lateral direction, i.e. oblique to the direction of travelling according to the traffic lane. The lateral velocity dimension represents the velocity of the vehicle in the lateral direction, wherein the lateral distance dimension represents the distance of the vehicle to a boundary of the traffic lane. The boundary is preferably between two adjacent lanes, but it can in principle also be an outer boundary. Furthermore, the boundary can be marked on the lane, which is preferred, but this in not mandatory. The two lateral vehicle parameters, namely lateral velocity and lateral distance are interrelated insofar that lateral velocity represents the rate of change of lateral distance. However, the distance itself provides more information than the velocity alone. To this end, it has been found that the particular combination is effective not only for providing a compact data base, but also for defining the classification function in the same parameter space.

In an embodiment, the classification function is defined by at least one polynomial function, preferably sectionally by a plurality of polynomial functions. This type of function is relatively easy to train and can be stored in a compact representation. The possible complexity of the classification boundary is also sufficient for robust classification. It is also less prone to overfitting than more complex function types. In one specific embodiment, the function can be defined by at least one spline function, for example by interpolating a plethora of training data points mapped in the lateral velocity dimension and the lateral distance dimension.

In another embodiment, the step of assigning the movement of the vehicle to the lane changing class or the lane keeping class comprises a step of determining a probability value representing the probability of the vehicle departing from the traffic lane or staying on the traffic lane, respectively. The probability value is determined on the basis of a distance between at least one movement data point and the classification function, the movement data point being dependent on the lateral velocity and the lateral distance of the vehicle. For example, the movement data point is described by the current lateral velocity and distance of the vehicle. An orthogonal distance may be calculated between this data point and the classification function. The classification function can be a graph in a two-dimensional coordinate system comprising the lateral velocity and lateral distance dimensions. Preferably, the coordinate system only comprises said dimensions.

In another embodiment, the computer hardware components used for carrying out the method belong to a computer system of an ego vehicle travelling on an ego traffic lane, wherein the ego traffic lane is separated from the traffic lane of the other vehicle by the boundary between the lanes. The vehicle that is subject to lane change classification can also be denoted as the target vehicle, which is monitored by the ego vehicle with respect to its lateral movement for the purpose of lane change classification. The corresponding assignment of the target vehicle movement to the lane changing or lane keeping class can be readily available for use in one or more automated driving functions of the ego vehicle. In this way, the automated driving functions of the ego vehicle can be operated with greater reliability and safety, particularly by reducing the risk of sudden braking events due to false positive lane change classifications.

The sensor data used for determining the lateral velocity and the lateral distance of the (target) vehicle is preferably acquired by means of a plurality of sensors mounted at the ego vehicle. The sensors preferably comprise at least one of a radar sensor, a lidar sensor or a camera. Other sensor types are also possible.

As indicated above, the method described herein is preferably used for implementing assisted or automated driving functions of the ego vehicle. In this connection, the ego vehicle can be controlled based on the assignment of the movement of the vehicle to the lane changing class or the lane keeping class. For example, if the ego vehicle classifies the target vehicle on the neighbouring lane as a lane changing vehicle, e.g. the vehicle is considered to cut into the ego lane, the ego vehicle may provide an optical or acoustic warning signal to the driver to initiate a reduction of velocity of the ego vehicle. The ego vehicle may also automatically reduce the velocity by activating a breaking system in response to a detected lane change of the target vehicle into the ego lane.

In another embodiment, the classification function is defined in the lateral velocity dimension and the lateral distance dimension only. The classification function can thus be defined in a very compact way. However, a robust classification can still be ensured while complexity is limited.

Regarding the temporal scope of sensor data it is preferred that it covers a reasonable amount of time to ensure that the data base for classification is reliable. For example, the sensor data can represent the lateral movement of the vehicle over a predetermined time period, which is at least 0.4 seconds. The time period may also be limited to a maximum value, e.g., 1 second, so that the current movement of the vehicle is determined with sufficient exactness (i.e. the data is not blurred over a long time span).

According to another aspect, the disclosure relates to a computer system comprising a plurality of computer hardware components configured to carry out at least some steps of the method of one of the described embodiments. As such, the method steps carried out by the computer hardware components are computer-implemented steps. The computer system is preferably part of the ego vehicle, which carries out the method for lane change classification of one or more target vehicles travelling on the ego traffic lane or an adjacent traffic lane.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer-implemented method in the computer system. The non-transitory data storage and/or the memory unit may comprise a computer program for instructing the computer system to perform several or all steps or aspects of the computer-implemented method described herein, for example using the processing unit and the at least one memory unit.

In another aspect, the present disclosure is directed at a vehicle comprising said computer system for carrying out at least some steps of the method. The vehicle can be an ego vehicle, which carries out the method for lane change classification of one or more target vehicles travelling on the ego traffic lane or an adjacent traffic lane.

In another aspect, the present disclosure is directed at a non-transitory computer readable storage comprising instructions which, when executed by a processor, cause (or make) a processor of a computer system to carry out several or all steps or aspects of the method described herein. The computer readable storage may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable storage may be configured as a data storage that is accessible via a data connection, such as an internet connection. The computer readable storage may, for example, be an online data repository or a cloud storage.

The present disclosure is also directed at a computer program for instructing a computer system to perform several or all steps or aspects of the method described herein.

Exemplary embodiments and functions of the present disclosure are described herein in conjunction with the following drawings, showing schematically:
- Fig. 1 a schematic flow chart of a method for lane change classification of a vehicle;
- Fig. 2 a schematic traffic scenario for illustrating aspects of the method from Fig. 1;
- Fig. 3 a schematic diagram illustrating further aspects of the method from Fig. 1;
- Fig. 4 a computer program for carrying out the method from Fig. 1; and
- Fig. 5 a schematic vehicle with a computer system for carrying out the method from Fig. 1

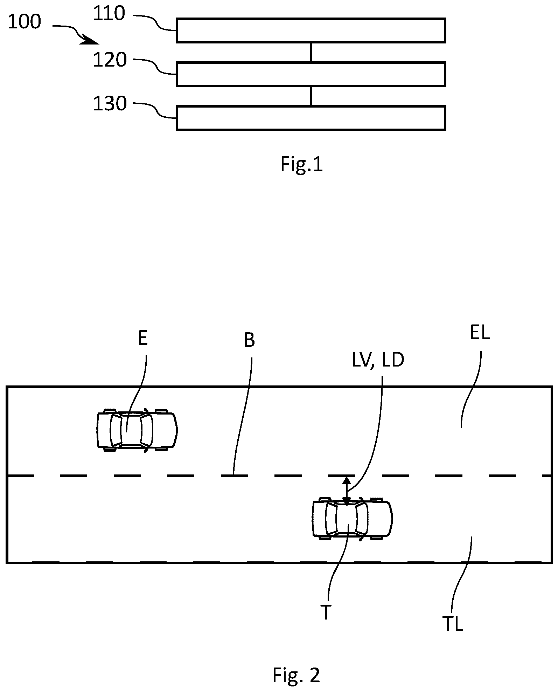

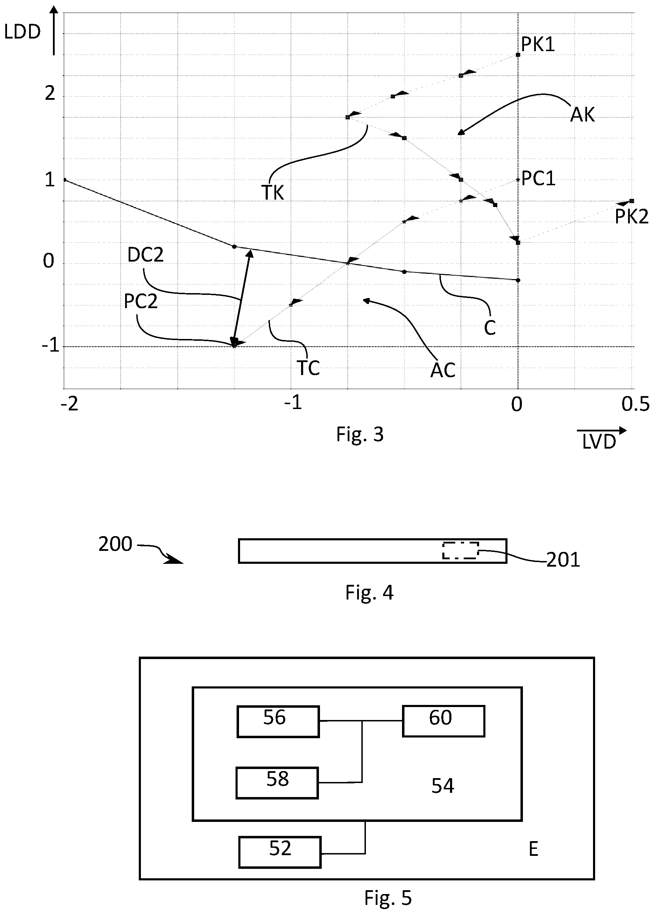

A computer-implemented method 100 for lane change classification of a target vehicle T comprises a plurality of steps 110, 120, and 130, cf. Fig. 1. The individual steps are described with particular reference to Fig. 2 and Fig. 3.

In step 110, an ego vehicle E acquires sensor data representing a movement of the target vehicle T. The ego vehicle E travels on an ego vehicle lane EL, while the target vehicle T travels on a target vehicle lane TL. The ego vehicle lane EL is parallel and adjacent to the target vehicle lane TL. Both lanes EL and TL are separated by a boundary marking B. The vehicles E and T travel in a forward direction with similar non-identical velocity, but other traffic scenarios are possible, including presence of more vehicles on both lanes EL and TL and other vehicle types than passenger cars (not shown).

The sensor data representing the movement of the target vehicle T is acquired by ego vehicle E with a sensor system 52 detailed further below in connection with Fig. 5. The sensor data is continuously determined at subsequent points in time with a resolution below 0,2 seconds. Based on a time span of at least 0.4 seconds of the sensor data, method step 120 comprises to determine a lateral velocity LV of the target vehicle T and a lateral distance LD of the vehicle T. Both lateral components LV and LD are determined relative to the boundary B between the lanes EL and TL, as indicated in Fig. 2 by a bidirectional arrow.

In step 130, the lateral movement of the vehicle T, as represented by the lateral components LD and LV, is assigned to a lane changing class or a lane keeping class on the basis of a classification function C, wherein reference will be made to Fig. 3 to describe examples of this procedure.

The classification function C is illustrated in Fig. 3 as a sectionally defined function in a cartesian coordinate system including a lateral velocity axis LVD (horizontal axis, representing the lateral velocity LV of the vehicle T) and a lateral distance axis LDD (vertical axis, representing the lateral distance LD of the vehicle T). The classification function C is shown between a lateral distance range LD of 0 and +1 and a lateral velocity range LV between -2 and 0. It is understood that the values are merely examples for illustrating the method 100, in particular step 130, but they are not limited to specific units or ranges.

Negative values of lateral velocity LV are defined to indicate that the target vehicle T moves towards the boundary B, while positive values indicate the opposite direction. The lateral distance axis LDD is adjusted to the boundary B, i.e. a lateral distance LD of zero means that the lateral distance LD of the vehicle T to the boundary B is also zero. Positive values of lateral distance LD indicate that the vehicle T has not crossed the boundary B, i.e. it is outside the ego vehicle lane EL and assumed to be within the target vehicle lane TL. Negative values of the lateral distance LD indicate that the vehicle T has crossed the boundary B and has thus at least partly entered the ego vehicle lane EL in front of the ego vehicle EL (cut-in maneuver).

The classification function C is a binary classifier, which roughly separates the space in the coordinate system of Fig. 3 into two classification areas. The classification area AC below the function C defines the lane changing class being associated with the vehicle T departing from the target vehicle lane TL towards the ego vehicle lane EL. The classification area AK above the function C defines the lane keeping class being associated with the vehicle T staying on the lane TL. Therefore, the classification function C represents a boundary between the lane changing class and the lane keeping class for the vehicle T. The classification function C is preferably trained from extensive training sensor data, which is representative of lane changing and lane keeping examples. Training methods for binary classifiers as such are known from the prior art and may be used this purpose.

Fig. 3 includes two trajectories TK and TC, both comprising a plurality of data points, each point representing the lateral distance LD and the lateral velocity LV of the target vehicle T at subsequent points in time. The trajectory TK is an example where the movement of the vehicle T is assigned to the lane keeping class. It starts with the data point PK1 and ends with the data point PK2, wherein intermediate data points are interconnected with arrows. As can seen from Fig. 3, all data points of the trajectory TK are located in the classification area AK above the classification function C. The data points of the trajectory AK can be jointly evaluated to raise the reliability of the classification compared to classification based on a single data point of the trajectory. As such, the classification may be based on a trajectory or sequence of data points.

The trajectory TC is an example where the movement of the vehicle T is assigned to the lane changing class. It starts with the data point PC1 and ends with the data point PC2, wherein intermediate data points are interconnected with arrows. As can seen from Fig. 3, the data points of the trajectory TK are partly located in the classification area AK above the classification function C. Another portion of the data points, including the end point PC2, is located in the classification area AC below the classification function C, i.e. towards lower values of the lateral distance LD. By joint evaluation of all data points of the trajectory TK the corresponding lateral movement of the vehicle T is correctly assigned to the lane changing class. Alternatively, the classification may also be performed on single data points, wherein the classification result may change from one data point to the other.

An optional parameter considered for classification is the distance of a given data point of the trajectory AK or AC to the classification function C. This is shown in Fig. 3 for the end point PC2 of the trajectory TC, which has a distance DC2 to the classification function C. The distance DC2 corresponds to a probability that the data point is correctly assigned to the relevant class, namely the lane changing class. In other words, the larger the distance of a given data point from the classification function or graph C, the higher the probability that the location of the data point in the corresponding classification area AK or AC reflects the correct class.

Each of the steps 110, 120, 130, and further steps described above may be performed by computer hardware components of the ego vehicle E. In this respect, Fig. 5 shows a computer system 54 of vehicle E with a plurality of computer hardware components configured to carry out the steps of the computer-implemented method 100 for lane change classification, as described in connection with Fig. 1 and in greater detail with respect to Fig. 2 and Fig. 3. The computer system 54 may include a processor 56, a memory 60, and a non-transitory data storage 58. The processor 56 may carry out instructions provided in the memory 60.

The non-transitory data storage 58 may store a computer program 200, including instructions 201 for carrying out the method 100, cf. Fig. 4. The computer program 200 may be transferred to the memory 60 and then executed by the processor 56. The processor 56, the memory 60, and the non-transitory data storage 58 may be coupled with each other, e.g. via an electrical connection, such as, e.g., a cable or a computer bus or via any other suitable electrical connection to exchange electrical signals.

As indicated further above, the vehicle E comprises the sensor system 52, which is connected to the computer system for providing the sensor data being representative of the lateral movement of the vehicle T, cf. Fig. 2. To this extent, the sensor system 52 is configured to monitor the vehicle T and possible other vehicles on the ego vehicle lane EL and the target vehicle lane TL. The sensor system 52 can comprise high-performance sensors, for example a radar sensor unit, a Lidar sensor unit and/or a high-definition camera unit mounted on the ego vehicle EL (not shown). The computer system 54 is used to determine the lateral velocity LV and the lateral distance LD from the sensor data by using suitable algorithms known from the art, e.g. computer vision algorithms applied to 3D-image sensor data acquired by sensor system 52.

### List of Reference Signs

- 52: sensor system
- 54: computer system
- 56: processor
- 58: non-transitory data storage
- 60: memory
- 100: method
- 110: acquiring sensor data
- 120: determining lateral components
- 130: assigning the movement to classes
- 200: computer program
- 201: computer instructions

- AK: classification area lane keeping class
- AC: classification area lane changing class
- B: lane boundary
- C: classification function
- DC2: distance to classification function
- E: ego vehicle
- EL: ego vehicle lane
- LD: lateral distance
- LDD: lateral distance axis
- LV: lateral velocity
- LVD: lateral velocity axis
- PK1: starting point of lane keeping trajectory
- PK2: end point of lane keeping trajectory
- PC1: starting point of lane changing trajectory
- PC2: end point of lane changing trajectory
- T: target vehicle
- TC: lane changing trajectory
- TL: target vehicle lane
- TK: lane keeping trajectory

## Claims

1. Method for lane change classification of a vehicle, the method comprising the following steps carried out by computer hardware components:
acquiring sensor data representing a movement of a vehicle (T) on a traffic lane (TL) over a predetermined time period;
determining, on the basis of the sensor data, a lateral velocity (LV) of the vehicle (T) and a lateral distance (LD) of the vehicle (T) relative to a boundary (B) of the traffic lane (TL); and
assigning the movement of the vehicle (T) to a lane changing class (AC) or a lane keeping class (AK) on the basis of a classification function (C), the lane changing class (AC) being associated with the vehicle (T) departing from the traffic lane (TL), the lane keeping class (AK) being associated with the vehicle (T) staying in the traffic lane (TL),
wherein the classification function (C) is defined in a lateral velocity dimension (LVD) of the vehicle (T) and a lateral distance dimension (LDD) of the vehicle (T), and
wherein the classification function (C) represents a boundary between the lane changing class (AC) and the lane keeping class (AK).

2. The method of claim 1, wherein the classification function (C) is defined by at least one polynomial function.

3. The method of any one of claims 1 or 2, wherein the classification function (C) is defined sectionally by a plurality of polynomial functions.

4. The method of any one of the preceding claims,
wherein assigning the movement of the vehicle (T) to the lane changing class (AC) or the lane keeping class (AK) comprises determining a probability value representing the probability of the vehicle (T) departing from the traffic lane (TL) or staying in the traffic lane (TL), respectively,
wherein the probability value is determined on the basis of a distance (DC2) between at least one movement data point (PC2) and the classification function (C), the at least one movement data point (PC2) being dependent on the lateral velocity (LV) and the lateral distance (LD) of the vehicle (T).

5. The method of any one of the preceding claims, wherein the method is performed by a computer system (54) of an ego vehicle (E) travelling on an ego traffic lane (EL) separated from the traffic lane (TL) by the boundary (B).

6. The method of claim 5, wherein an assisted or automated driving function of the ego vehicle (E) is controlled based on the assigning of the movement of the vehicle (T) to the lane changing class (AC) or the lane keeping class (AK).

7. The method of any one of the preceding claims, wherein the classification function (C) is defined in the lateral velocity dimension (LVD) and the lateral distance dimension (LDD) only.

8. The Method of any one of the preceding claims, wherein the predetermined time period represented by the sensor data is at least 0.4 seconds.

9. Computer system (54) comprising a plurality of computer hardware components (56, 58, 60) configured to perform the method (100) according to any one of the preceding claims.

10. Vehicle comprising the computer system (54) of claim 9.

11. Non-transitory computer readable storage (58) comprising instructions causing a computer system (54) to perform the method (100) of any one of claims 1 to 8.
